# EUROPÄISCHE PATENTSCHRIFT

(11) **EP 0 827 235 B1**
(45) Veröffentlichungstag und Bekanntmachung des Hinweises auf die Patenterteilung: **14.03.2001**
(21) Anmeldenummer: 97110437.7
(22) Anmeldetag: 26.06.1997
(51) Int. Cl.: H01R 9/24, H01R 4/30

(54) **Potentialausgleichklemme**
Terminal for ground bar
Borne pour barre de masse

(30) Priorität: 31.08.1996 DE 19635400; 12.11.1996 DE 19646653
(43) Veröffentlichungstag der Anmeldung: 04.03.1998
(73) Patentinhaber: Pollmann Elektrotechnik GmbH, 59284 Oelde (DE)
(72) Erfinder: Voss, Ewald, 59302 Oelde (DE)
(74) Vertreter: Hassler, Werner, Dr.

(56) Entgegenhaltungen:
- EP-A- 0 325 371
- DE-U- 9 402 289
- DE-U- 29 512 907
- US-A- 3 312 874

## Beschreibung

Die Erfindung betrifft eine Potentialausgleichklemme mit einem Gehäuse, mit einer in dem Gehäuse gehaltenen Schiene, mit Klemmbügeln, wobei die Klemmbügel für Ausgleichleiter, Erdungsbänder, Blitzschutzleiter durch Schrauben an der Schiene festspannbar sind und mit einem Deckel, der schwenkbar mit dem Gehäuse verbunden ist.

Die DE 295 12 907 U1 beschreibt eine Potentialausgleichklemme der gattungsgemäßen Art. Muttern für die Schrauben müssen gesondert und verdrehungssicher in dem Gehäuse untergebracht werden. Außerdem ergibt sich für die Klemmbügel eine komplizierte Formgebung, um einen Verdrehungsschutz und eine genaue Ausrichtung zu gewährleisten.

Die DE 94 02 289 U1 beschreibt eine Klemmleiste zum Anschluß und Potentialausgleich von Schutzleitern mit einem Gehäuse, einer darin gehaltenen Schiene und einem Deckel. Zum Halten der Schiene sind Längswände am Gehäuse ausgebildet. Die Schiene weist Bohrungen zur Aufnahme von anzuschließenden Leitern und rechtwinklig dazu ausgerichtete Gewindelöcher auf, in die Schrauben zum Klemmen der Leiter eingreifen. Die Bohrungen erfordern eine massive Schiene und eine aufwendige Bearbeitung derselben. Außerdem muß der einrastbare Deckel für jede Montagearbeit abgenommen werden.

Aufgabe der Erfindung ist eine zwangsläufige Ausrichtung der Klemmbügel und die Vereinfachung der Schraubverbindungen.

Diese Aufgabe wird nach der Erfindung dadurch gelöst, daß das Gehäuse Längswände zum Halten der Schiene und zur Führung der Klemmbügel aufweist und daß die Schrauben in Gewindedurchgänge der Schiene eingreifen.

Die Erfindung unterscheidet sich insofern vom Stand der Technik, als das Gehäuse durch die Längswände eine exakte Führung und Ausrichtung der Schiene und der Klemmbügel sicherstellt. Infolgedessen ist eine einfache Gestaltung der Klemmbügel möglich. Die in die Schiene eingreifenden Schrauben verringern den elektrischen Übergangswiderstand und ermöglichen eine Vormontage der Schiene.

Zur erleichterten Einführung der Leiter ist vorgesehen, daß die Längswände Rinnen zur Einführung der Leiter aufweisen. Die Rinnen sind auf die Klemmstellen der Klemmbügel ausgerichtet, so daß der Leiter beim Einführen zwangsweise ausgerichtet wird.

Eine Vormontage der Klemmbügel unter Offenhaltung der Einführungsrinnen für Leiter wird dadurch erreicht, daß wenigstens ein Klemmbügel plattenförmig ausgebildet ist und in vormontiertem Zustand auf Stegen der Längswände klemmend aufliegt. Damit entfällt das Herausschrauben und Offenhalten der Klemmbügel bei der Montage der Leiter. Dieses bedeutet eine wesentliche Erleichterung für die Montage.

Ein sicheres Festklemmen in vormontiertem Zustand und ein leichtes Festziehen wird dadurch erreicht, daß die Stege für die Auflage hinterschnittene Profile mit gegeneinander geneigten Flächen aufweisen und daß an dem Klemmbügel abgekantete Schenkel in Anpassung an die geneigten Flächen der Profile vorgesehen sind.

Ein stabiles Gehäuse wird dadurch erzielt, daß die Längswände des Gehäuses durch Querstege und durch endständige Querwände miteinander verbunden sind und daß die auf den Querstegen aufliegende Schiene in dem Gehäuse durch an den endständigen Querwänden ausgebildete Clipsnasen gesichert ist.

Zur Erleichterung der Montage ist der Deckel an beiden Enden dadurch schwenkbar ausgebildet, daß der Deckel schalenförmig ausgebildet ist und an beiden Enden an Querwänden Mehrkantzapfen zur Einbettung in Gelenkaufnahmen aufweist. Somit kann der Deckel in beiden Richtungen aufgeklappt werden. Dieses ist bei der Anordnung in Ecken wichtig.

Eine sichere Festlegung des Deckels wird dadurch erzielt, daß eine Rastwand jeder Gelenkaufnahme eine Betätigungsnase zur Freigabe des Mehrkantzapfens aufweist.

Eine Sperrung des Deckels bei einem Aufklappwinkel von 90° oder 60° und 120° wird dadurch erzielt, daß die Mehrkantzapfen als Vierkantzapfen oder Sechskantzapfen ausgebildet sind.

Ausführungsbeispiele werden anhand der Zeichnungen erläutert, in denen darstellen:
Fig. 1 einen Schnitt durch eine Potentialausgleichklemme mit Ausgleichleitern,
Fig. 2 einen entsprechenden Schnitt ohne Ausgleichleiter,
Fig. 3 eine Draufsicht auf das Gehäuse,

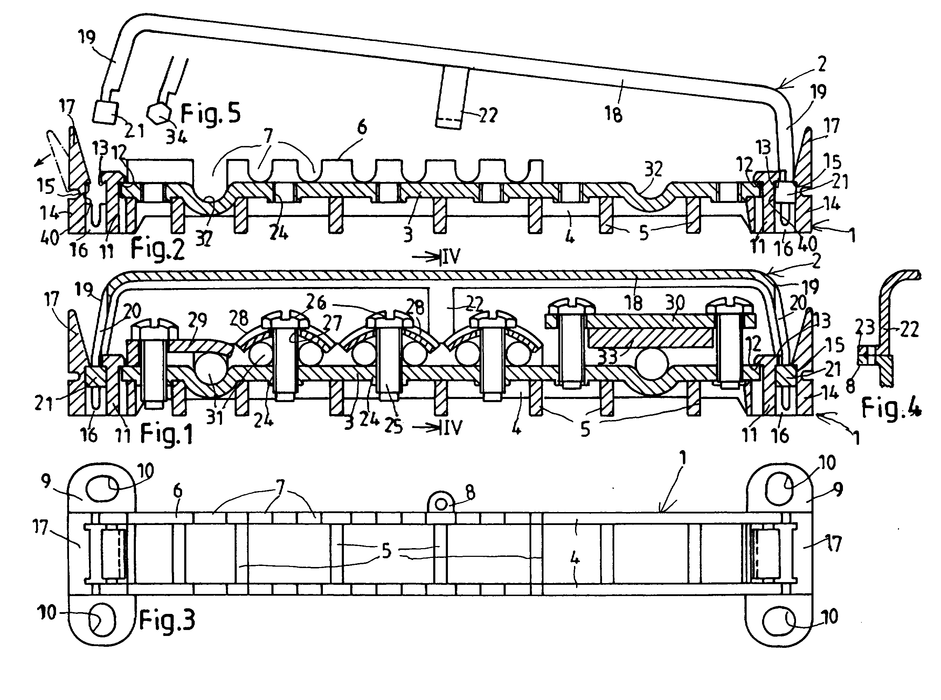

Fig. 4 einen Schnitt nach der Linie IV-IV in Fig. 1,
Fig. 5 ein abgewandeltes Gelenk des Deckels,
Fig. 6 einen Teilschnitt durch ein abgewandeltes Ausführungsbeispiel,
Fig. 7 einen Schnitt nach der Linie VII-VII in Fig. 6 und
Fig. 8 eine Darstellung des Klemmbügels in der Klemmstellung.

Die Potentialausgleichklemme umfaßt ein Gehäuse 1 mit einer Schiene 3 und einen Deckel 2. Das Gehäuse 1 und der Deckel 2 sind Thermoplastspritzgußteile; die Schiene 3 besteht aus Kupfer, einer Kupferlegierung oder einem anderen Stoff hoher elektrischer Leitfähigkeit.

Das Gehäuse 1 umfaßt zwei Längswände 4, die durch Querstege 5 miteinander verbunden sind. Die Oberkanten der Querstege 5 sind im wesentlichen in einer Ebene ausgerichtet und bilden eine Auflage für die Schiene 3. Die Längswände 4 weisen über einen Großteil ihrer Länge nach oben über die Schiene 3 überragende Stege 6 auf, zwischen denen halbkreisförmige Rinnen 7 ausgebildet sind. An einer Längswand 4 ist seitlich ein Auge 8 zur Aufnahme einer Plombe angeformt.

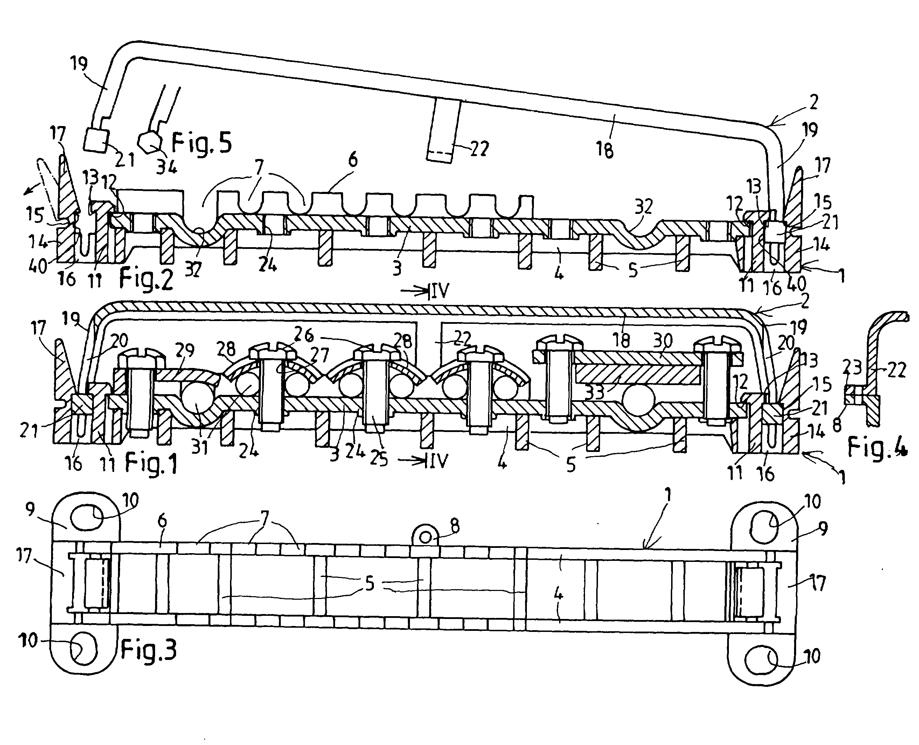

An den Enden des Gehäuses 1 sind Fußplatten 9 mit Durchgängen 10 für Befestigungselemente wie beispielweise Schrauben angeformt. Im Bereich der Fußplatten 9 sind über die Oberkanten der Querstege 5 vorstehende Querwände 11 mit Clipsnasen 12 vorgesehen. Jede Querwand 11 hat außerdem einen Gelenksteg 13. Der Querwand 11 steht eine Rastwand 14 gegenüber, die ebenfalls einen Gelenksteg 15 aufweist. Die Querwand 11 und die Rastwand 14 sind durch eine geschlitzte Wand 16 miteinander verbunden, die eine Nachgiebigkeit sicherstellt. An die Rastwand 14 schließt eine Betätigungsnase 17 an, die in Pfeilrichtung gemäß dem linken Teil der Fig. 2 verschwenkt werden kann. Jeweils ein Paar aus einer Querwand 11 und einer Rastwand 14 bildet eine Gelenkaufnahme 40.

Der Deckel 2 ist im wesentlichen schalenförmig ausgebildet. An beiden Enden der Kopfwand 18 sitzen Querwände 19 mit je einem Fenster 20 und einem Rechtkantzapfen 21 als Gelenkzapfen. Der Dekkel 2 ist symmetrisch ausgebildet. An einer Längsseite ist ein Steg 22 mit einm Auge 23 angeordnet, das zu dem Auge 8 des Gehäuses 1 paßt.

Schließlich ist die Schiene 3 eine massive, rechteckförmige Kupferschiene mit Gewindedurchgängen 24, in die jeweils ein Gewindeschaft 25 einer Schraube 26 eingeschraubt werden kann. Die Schrauben 26 sind etwa auf die Stege 6 ausgerichtet. Jede Schraube 26 durchdringt ein Durchgangsloch 27 eines kreissegmentförmigen zweischenkligen Klemmbügels 28, eines abgewinkelten Klemmbügels 29 oder eines als ebene Platte ausgebildeten Klemmbügels 30. Die Schiene 3 ist im wesentlichen eben; sie kann auch Rinnen 32 zur Einlage von Ausgleichleitern 31 oder anderen Erdungsleitern aufweisen. Der als enem Platte ausgebildete Klemmbügel 30 ist besonders für Erdungsbänder 33 geeignet. Die Rinnen 7 sichern eine zwangsläufige Ausrichtung der Leiter 31 auf die Klemmbügel 28, so daß das Einführen bei der Montage außerordentlich erleichtert wird.

Der Deckel 2 wird mit den Vierkantzapfen 21 in die jeweils durch die Gelenkstege 13, 15 und die Querwand 11 sowie die Rastwand 14 bestimmten Gelenkaufnahmen 40 eingedrückt. Durch Verschwenkung einer Betätigungsnase 17, vergleiche Fig. 2 links, kann der Deckel 2 einseitig ausgehoben und für Montagezwecke hochgeschenkt werden. In der 90°-Stellung verriegelt der Vierkantzapfen 21' den Dekkel 2 in hochgeklappter Stellung, so daß der Deckel 2 festgestellt ist und Montagearbeiten nicht behindert. Die Ausgleichleiter 31 können eingeführt und festgeklemmt werden. In geschlossenen Zustand des Deckels 2 kann eine Plombe in Augen 18 und 23 gelegt werden, um die Potentialausgleichklemme zu sichern

Nach Fig. 5 kann man an dem Deckel 2 auch Sechskantzapfen 34 vorsehen. Dadurch ergibt sich eine Sicherung des Deckels 2 bereits nach Hochklappen um 60° sowie bei 120°.

Das Ausführungsbeispiel nach den Fig. 6 bis 8 sieht eine Sicherung oder Fixierung des plattenförmigen Klemmbügels 35 in der Einführungsstellung für einen Leiter in eine Rinne 7 vor. An dem plattenförmigen, zweischenkligen Klemmbügel 35 sind die Querschenkel 36 zwischen den Längswänden 4 gegen die Schiene 3 hin abgekantet. An den den Längswänden 4 anliegenden Kanten sind an den Stegen 6 anliegende Schenkel 37 in entgegengesetzter Richtung abgekantet. Die Stege 6 weisen kopfseitig hinterschnittene Profile 38 mit gegeneinander geneigten Flächen auf.

Fig. 7 zeigt die Schraube 26 und den Klemmbügel 35 in vormontiertem Zustand. Der Klemmbügel 35 stützt sich mit den Schenkeln 37 auf den gegeneinander geneigten Flächen der Profile 38 ab. Die Schraube 26 kann so weit angezogen werden, daß sich der Klemmbügel 35 an den Profilen festspannt. Die Rinnen 7 sind zum Einführen eines Leiters frei zugänglich, so daß die Schrauben 26 vor der Montage der Leiter nicht gelöst werden müssen. Die Leiter können ohne weiters eingeführt werden. Beim Festdrehen der Schrauben 26 gleiten die Klemmplatten 35 über die Profile 38, so daß die Schenkel des Klemmbügels 35 wirksam werden. Diese Stellung ist in Fig. 8 dargestellt.

## Patentansprüche

1. Potentialausgleichklemme mit einem Gehäuse (1), mit einer in dem Gehäuse (1) gehaltenen Schiene (3), mit Klemmbügeln (28, 29, 30), wobei die Klemmbügel (28, 29, 30) für Ausgleichleiter, Erdungsbänder, Blitzschutzleiter durch Schrauben (26) an der Schiene (3) festspannbar sind, und mit einem Deckel (2), der schwenkbar mit dem Gehäuse (1) verbunden ist, dadurch gekennzeichnet, daß das Gehäuse (1) Längswände (4) zum Halten der Schiene (3) und zur Führung der Klemmbügel (28, 29, 30) aufweist und daß die Schrauben (26) in Gewindedurchgänge (24) der Schiene (3) eingreifen.

2. Potentialausgleichklemme nach Anspruch 1, dadurch gekennzeichnet, daß die Längswände (4) Rinnen (7) zur Einführung der Leiter (31) aufweisen.

3. Potentialausgleichklemme nach Anspruch 1 oder 2, dadurch gekennzeichnet, daß wenigstens ein Klemmbügel (28, 35) zweischenklig, insbesondere kreissegmentförmig ausgebildet ist.

4. Potentialausgleichklemme nach Anspruch 3, dadurch gekennzeichnet, daß wenigstens ein Klemmbügel (35) plattenförmig ausgebildet ist und in vormontiertem Zustand auf Stegen (6) der Längswände (4) klemmend aufliegt.

5. Potentialausgleichklemme nach Anspruch 4, dadurch gekennzeichnet, daß die Stege (6) für die Auflage hinterschnittene Profile (38) mit gegeneinander geneigten Flächen aufweisen und daß an dem Klemmbügel (35) abgekantete Schenkel (37) in Anpassung an die geneigten Flächen der Profile (38) vorgesehen sind.

6. Potentialausgleichklemme nach Anspruch 1 oder 2, dadurch gekennzeichnet, daß wenigstens ein Klemmbügel (30) als abene Platte ausgebildet ist.

7. Potentialausgleichklemme nach Anspruch 1 oder 2, dadurch gekennzeichnet, daß wenigstens ein Klemmbügel (29) einschenkelig ausgebildet ist, wobei der Schenkel an seinem Ende abgewinkelt ist.

8. Potentialausgleichklemme nach einem der Ansprüche 1 bis 7, dadurch gekennzeichnet, daß die Längswände (4) des Gehäuses (1) durch Querstege (5) und durch endständige Querwände (11) miteinander verbunden sind und daß die auf den Querstegen (5) aufliegende Schiene (3) in dem Gehäuse (1) durch an den endständigen Querwänden (11) ausgebildete Clipsnasen (12) gesichert ist.

9. Potentialausgleichklemme nach einem der Ansprüche 1 bis 8, dadurch gekennzeichnet, daß der Deckel (2) schalenförmig ausgebildet ist und an beiden Enden an Querwänden (19) Mehrkantzapfen (21, 34) zur Einbettung in Gelenkaufnahmen (40) aufweist.

10. Potentialausgleichklemme nach Anspruch 9, dadurch gekennzeichnet, daß eine Rastwand (14) jeder Gelenkaufnahme (40) eine Betätigungsnase (17) zur Freigabe des Mehrkantzapfens (21, 34) aufweist.

11. Potentialausgleichklemme nach Anspruch 8 oder 10, dadurch gekennzeichnet, daß die Mehrkantzapfen als Vierkantzapfen (21) oder Sechskantzapfen (34) ausgebildet sind.

## Claims

1. Potential-bonding terminal having a housing (1), having a rail (3) held in the housing (1), having clamping clips (28, 29, 30), in which case the clamping clips (28, 29, 30) can be firmly clamped on the rail (3) by means of screws (26) for bonding conductors, earthing strips or lightning protection conductors, and having a cover (2) which is connected to the housing (1) such that it can pivot, characterized in that the housing (1) has longitudinal walls (4) for holding the rail (3) and for guiding the clamping clips (28, 29, 30), and in that the screws (26) engage in threaded openings (24) through the rail (3).

2. Potential-bonding terminal according to Claim 1, characterized in that the longitudinal walls (4) have grooves (7) for the insertion of the conductors (31).

3. Potential-bonding terminal according to Claim 1 or 2, characterized in that at least one clamping clip (28, 35) has two limbs, and in particular is in the form of a circle segment.

4. Potential-bonding terminal according to Claim 3, characterized in that at least one clamping clip (35) is in the form of a plate and, in the preassembled state, rests on webs (6) on the longitudinal walls (4) in a clamping manner.

5. Potential-bonding terminal according to Claim 4, characterized in that, in order to provide the rest, the webs (6) have undercut profiles (38) with surfaces which are inclined with respect to one another, and in that bent limbs (37) are provided on the clamping clip (35), matching the inclined surfaces of the profiles (38).

6. Potential-bonding terminal according to Claim 1 or 2, characterized in that at least one clamping clip (30) is in the form of a flat plate.

7. Potential-bonding terminal according to Claim 1 or 2, characterized in that at least one clamping clip (29) has one limb, with the limb being bent at its end.

8. Potential-bonding terminal according to one of Claims 1 to 7, characterized in that the longitudinal walls (4) of the housing (1) are connected to one another by means of transverse webs (5) and by transverse walls (11) at the ends, and in that the rail (3) which rests on the transverse webs (5) is secured in the housing (1) by means of clip tabs (12) which are formed on the transverse walls (11) at the ends.

9. Potential-bonding terminal according to one of Claims 1 to 8, characterized in that the cover (2) is in the form of a shell and, on transverse walls (19) at both ends, has polygonal pins (21, 34) for embedding in joint holders (40).

10. Potential-bonding terminal according to Claim 9, characterized in that a latching wall (14) of each joint holder (40) has an operating tab (17) for releasing the polygonal pin (21, 34).

11. Potential-bonding terminal according to Claim 8 or 10, characterized in that the polygonal pins are in the form of quadrilateral pins (21) or hexagonal pins (34).

## Revendications

1. Borne pour barre de masse avec un boîtier (1), avec un rail (3) maintenu dans le boîtier (1), avec des étriers de serrage (28, 29, 30), dans laquelle les étriers de serrage (28, 29, 30) pour des conducteurs d'équipotentialité, des bandes de mise à la terre, des conducteurs de paratonnerre peuvent être attachés au rail (3) par des vis (26), et avec un couvercle (2) qui est assemblé de façon pivotante au boîtier (1), caractérisée en ce que le boîtier (1) présente des parois longitudinales (4) pour maintenir le rail (3) et pour guider les étriers de serrage (28, 29, 30) et en ce que les vis (26) s'engagent dans des passages filetés (24) à travers le rail (3).

2. Borne pour barre de masse suivant la revendication 1, caractérisée en ce que les parois longitudinales (4) présentent des rainures (7) pour l'introduction des conducteurs (31).

3. Borne pour barre de masse suivant la revendication 1 ou 2, caractérisée en ce qu'au moins un étrier de serrage (28, 35) présente une configuration à deux branches, en particulier en forme de croissant.

4. Borne pour barre de masse suivant la revendication 3, caractérisée en ce qu'au moins un étrier de serrage (35) est de forme plate et est serré, à l'état prémonté, sur des nervures (6) des parois longitudinales (4).

5. Borne pour barre de masse suivant la revendication 4, caractérisée en ce que les nervures (6) présentent des profils d'appui en contre-dépouille (38) avec des faces inclinées l'une vers l'autre et en ce qu'il est prévu sur l'étrier de serrage (35) des branches chanfreinées (37) s'adaptant aux faces inclinées des profils (38).

6. Borne pour barre de masse suivant la revendication 1 ou 2, caractérisée en ce qu'au moins un étrier de serrage (30) a la forme d'une plaque plane.

7. Borne pour barre de masse suivant la revendication 1 ou 2, caractérisée en ce qu'au moins un étrier de serrage (29) présente une configuration à une seule branche, la branche étant coudée à son extrémité.

8. Borne pour barre de masse suivant l'une quelconque des revendications 1 à 7, caractérisée en ce que les parois longitudinales (4) du boîtier (1) sont reliées les unes aux autres par des nervures transversales (5) et par des parois transversales d'extrémité (11), et en ce que le rail (3) reposant sur les nervures transversales (5) est fixé dans le boîtier (1) par des attaches à clipser (12) formées dans les parois transversales d'extrémité (11).

9. Borne pour barre de masse suivant l'une quelconque des revendications 1 à 8, caractérisée en ce que le couvercle (2) est configuré en forme de coquille et présente aux deux extrémités, dans des parois transversales (19), des pivots polygonaux (21, 34) à introduire dans des logements d'articulation (40).

10. Borne pour barre de masse suivant la revendication 9, caractérisée en ce qu'une paroi d'emboîtement (14) de chaque logement d'articulation (40) présente un doigt de commande (17) pour la libération du pivot polygonal (21, 34).

11. Borne pour barre de masse suivant la revendication 8 ou 10, caractérisée en ce que les pivots polygonaux sont des pivots à quatre pans (21) ou à six pans (34).
